# EUROPEAN PATENT APPLICATION

(11) **EP 0 599 573 A1**
(43) Date of publication of application: **01.06.1994**
(21) Application number: 93309277.7
(22) Date of filing: 22.11.1993
(51) Int. Cl.: B23P 21/00, B23Q 7/14

(54) **Method of assembly of articles**

(30) Priority: 26.11.1992 GB 9224749
(71) Applicant: Black & Decker Inc., Newark Delaware 19711 (US)
(72) Inventor: Perdrix, Bernard Gabriel, CH-2854 Bassecourt (CH)
(74) Representative: Lunt, George Francis Mark

(57) **Abstract**

An assembly arrangement for the assembly of product, comprises a floor area (12) and an assembly cell (10) on said area. The cell comprises a plurality of fixed workstations (14) defining a work area. Each workstation has a front, at which a worktable (30) is positioned, and a socket (32), adapted to receive a carriage (34) for assembly parts. The socket is positioned at the said or rear of the workstation. Space is provided to enable the carriage to be inserted in the socket without entering the work area. The workstation is arranged so that an operator (A) in the work area in front of a worktable is able to take parts from said carriage and conduct a stage of assembly of the product. A product stand (22,26) is adapted to receive a number of units of the product in the course of its assembly and to transport those units from workstation to workstation conducting different assembly operations on them.

## Description

This invention relates to a method of assembly of articles in a factory where the articles in question are to be made and sold in low volume in response to demand.

At present, there might be said to be two types of manufacturer (or rather assembler) of finished products such as power tools, houseware products, telephones etc. Firstly, there is the large scale manufacturer, who has an assembly line dedicated to the assembly of large numbers of whatever article is required. Here, a conveyor or the like carries the part-assembled product along the line where operators pick up the part, perform a given operation, and replace the product on the line for further operations downstream. The production is matched to the demand and the line is rendered efficient by all sorts of ideas and improvements (usually of a dedicated nature) so that the product is made according to specifications etc at the requisite rate. Indeed, the production rate is usually controlled simply by varying staff working hours.

Nevertheless, such a line lacks flexibility. Firstly, the absolute rate of production of finished product cannot easily be adjusted. Nor can the specification of the product be easily changed or altered. In a seasonal product, such as lawn-mowers for example, the line may be shut down for a period of the year when it remains idle. It is usually started well in advance of the required production date so that stock-piles build-up. However, this is unavoidable.

Another type of manufacturer is the small scale manufacturer. He does not require an assembly line because his production volume is insufficient to justify it. Nevertheless, he adopts a method where his production fits his demand. Such a manufacturer might be called the craftsman or artisan type of manufacturer where the manufacturing process is designed en route and adapted to changing circumstances as required. It is a very flexible approach and every product is in essence a prototype. A new definition of the manufacturing process is required everytime a product is to be built and this leads to a whole series of problems when the process is repeated. Firstly, because the process evolves as it is employed, it requires a high degree of skill (hence the craftsman/artisan label). Secondly, since every problem is addressed as it arises it is almost impossible to maintain consistency.

There is a third type of manufacturer who is neither a small scale nor large scale manufacturer but perhaps a cross between them. In the power tool business, for example, as in many industries, it is not acceptable (if one's products are to be taken by the larger distributors who wish to sell a range of products) merely to produce the one or two tools which sell in many units. A manufacturer must also produce the whole range of other tools, some of which may have sales of only a few units.

Thus the large scale manufacturer of one type of tool generally must, at the same time, be a small scale manufacturer of other tools. There is normally a traditional assembly line for the large scale products, but the smaller scale products have to fit in to the production cycle as best they can. They are made using the craftsman/artisan approach described above. What makes matters worse, is that statistical forecasts for large scale production are normally quite accurate and adjustments to meet what small variation in demand there is can easily be made as mentioned above simply by varying staff working hours. With small scale production however, estimates may be inaccurate by as much as 100% which, of course, makes planning extremely difficult. In any event, it seldom makes sense to learn, or perhaps re-learn, a production process for only an insignificant production run. A minimum batch size is usually a prerequisite. Moreover, while the large scale production may be of one or two product types, the small scale production is sure to be required for considerably more product types. With traditional assembly techniques, it is therefore usually necessary to make many more of the small scale items than is actually estimated and store the excess in case the demand exceeds the estimate.

It is an object of the present invention to provide an assembly arrangement which copes well with small scale production according to demand, and does not suffer from, or at least mitigates the effects of, the afore-mentioned problems.

In accordance with this invention there is provided an assembly anangement for the assembly of product, said arrangement comprising an assembly cell having a plurality of fixed workstations defining a work area, each workstation having a front, at which a worktable is positioned, and a receptor, adapted to receive a carriage for assembly parts, said receptor being positioned at the side or rear of the workstation, space being provided to enable said carriage to be engaged with said receptor without entering said work area, and the workstation being arranged so that an operator in said work area in front of one of said worktables is able to take said parts from said carriage to conduct a stage of assembly of said product, and a product transport system, adapted to receive said product in the course of its assembly and to transport said product from workstation to workstation in said work area for coducting different assembly operations on said products.

Preferably said transport system comprises a product stand adapted to receive a plurality of said product.

Preferably the arrangement further comprises a mobile workstation on which said stand can be transported between said fixed workstations.

Preferably, said workstations are arranged in two parallel rows defining therebetween said work area, and said mobile workstation is arranged to move back and forth between said rows, the workstations being so arranged that an operator in front of the mobile workstation has three workstations in easy reach, namely the mobile workstation and a fixed workstation on either side.

In this way the area available to an operator can be maximised without he/she having to move significantly between workstations.

Preferably each workstation has specific tools provided for performing assembly operations on the product.

Thus the assembly cell can be adapted easily to a particular product by inserting carriages pre-loaded (and pre-planned) with appropriate parts. The stands employed may be dedicated to the particular product. The workstation may have specific tools connected for particular functions. Otherwise the assembly cell is the same for one product as it is for another.

It should be borne in mind that, while a tool manufacturer may have, say, twenty tools to make which each may be quite different from the others, each tool may have about eight different executions according to where it is going to be sold. For example, in the US special radio interference suppression is not required, in the UK a special three pin plug is needed and perhaps in Germany special dust extraction facilities may be expected. The tool is basically the same, and while special executions may be expected to change from time to time as regulations are adopted, changed or harmonised, new requirements will doubtless always emerge maintaining the uniqueness of particular executions. So in a tool whose sales around the world can be measured in only hundreds per week there may only be a requirement of perhaps ten per week of a particular execution of that tool. Thus the present invention allows great flexibility but at the same time consistency and reliability. Despite the flexibility, work schedules can be preplanned and documented and, since it takes only a matter of minutes to change over carriages to adapt for different executions, the minimum batch size can be reduced effectively down to one single unit if required. Indeed, normally, a complete month of manufacturing would be preplanned and even if the production requirement in a whole year of a particular tool could be met in one or two weeks, the production will be divided according to when those tools are actually required. That is to say, a small number might be made every month and production might be spread throughout the month. Thus production can match demand precisely, even where the demand fluctuates at short notice.

The stand may be arranged to carry eight part-assembled products so that an operator performs assembly functions at a workstation on these eight (using parts from that workstation's carriage) before moving the stand, preferably via the mobile workstation, to another workstation where further assembly operations may be performed using parts from its carriage. Thus a single operator could assemble the whole of a particular product and indeed, this is an added benefit of this method of construction. This is because employees can obtain accreditation if they are capable of assembling a given product and they can be rewarded according to the number of accreditations they have in respect of different products.

When sufficient stock of the product has been assembled the cell can be transformed by inserting carriages having different parts of other products and using different stands. Thus each cell can be adapted for the assembling of different products with the minimum of disruption.

Each cell is arranged to be operated by a single person or by two or more people when demand is high. Instead of a single operator moving from workstation to workstation, the stand can be passed from one operator to the next.

A further benefit derived from this method and arrangement for assembling product, apart from the benefit that it gives great flexibility allowing close adherence to the "just-in-time" principle (ie removing the need for large inventories of finished product), is that it makes preparation of the product parts prior to assembly much easier and more efficient.

All the workstations have carriages carrying the parts which ultimately comprise the finished product. All parts are carried in dedicated carriages. These carriages can be stocked with parts in the stock room. Hitherto, it has been usual for boxes of parts to be prepared at a preparation table in the stock room where the storeperson goes to the store shelf and carries a collection of the relevant parts to the preparation table. He/she weighs out or counts the requisite number of parts which are put in the box and then on a trolley. The collection is returned to its store shelf. Thus for each part the storeperson makes two return trips to the store shelf.

With the arrangement of the present invention, however, the carriages are arranged as stable units mounted on wheels for easy maneuvering and, of course, insertion in the sockets of the assembly cells. Thus it is now a simple matter to attach the weighing machine (mounted in its own frame) on the carriage so that the storeperson pushes the carriage around the store taking parts from the store shelves and weighing them directly into their boxes. In this respect it then makes sense to arrange the store according to the cells it serves. For example,.a rack is dedicated to one assembly cell, while another rack is dedicated to a different cell. The boxes are preferably located in the carriages such that, when the carriage is inserted in its socket in an assembly cell, an operator in the cell can reach parts in the boxes without having to remove the boxes from the carriage. To this end, the carriages may have sloping shelves which can move between a storage/transport position and a working position in which they project over the worktable to make easier operator access to the boxes they carry. Spare boxes of larger parts may be stored on shelves beneath the level of the worktable to assist carriage stability. Carriages are kept in a corral area when not in use in a cell.

Thus an assembly cell can be adapted to various products. In the power tool business, these products have the advantage of being of essentially the same type: a housing mounting a motor connected through a switch to a power cable and driving (optionally) a gearbox connected to a tool head. Consequently essentially the same assembly routines are employed regardless of the actual tool being constructed. On the other hand, variations in the technique to be employed do exist and the design of each assembly cell requires detailed planning. This includes such factors as whether special techniques are required eg presses, solder equipment etc. However, once it is designed, each carriage becomes dedicated to particular parts and a particular location in a particular cell. Thus the storeperson need only have the list of parts required for each carriage and he/she can organise the stock requirements of each cell with minimum guidance. It should be borne in mind that probably not all parts come from the store area. Some parts require pre-assembly such as motors or pre-treatment such as painted housings. These parts will come from other areas of a factory but still in standard boxes and loaded on the carriages.

The invention is further described hereinafter, by way of example only, with reference to the accompanying drawings, in which:-
Figure 1 is a plan view of an assembly cell according to the present invention;
Figure 2 is a sketched perspective view of such an assembly cell;
Figure 3 is an end elevation of a cell;
Figure 4 is a side elevation with one side of the cell removed; Figures 5a and b are perspective views of the bases of mobile workstations capable of nesting together;
Figure 5c is a perspective view of a lock, to lock the mobile workstations of Figure 5a and b together;
Figures 6a and b are like Figures 5a and b only at the worktable height of the workstations;
Figure 7 is a detail of the wheel arrangements of the workstations of Figures 5 to 6;
Figure 8a is a side view, partly in section of a product stand according to the invention;
Figure 8b is a perspective view of the frame of the stand of Figure 8a;
Figure 8c is a section view of a lock for the stand of Figure 8a;
Figure 9 is a top plan view of the bases of the workstations of Figures 5 to 7 when nested together;
Figure 10 is a perspective view of the worktables of the workstations of Figures 5 to 7 and 9 when nested together; and
Figure 11 is a side elevation of nested workstations along the line XI-XI in Figure 9.

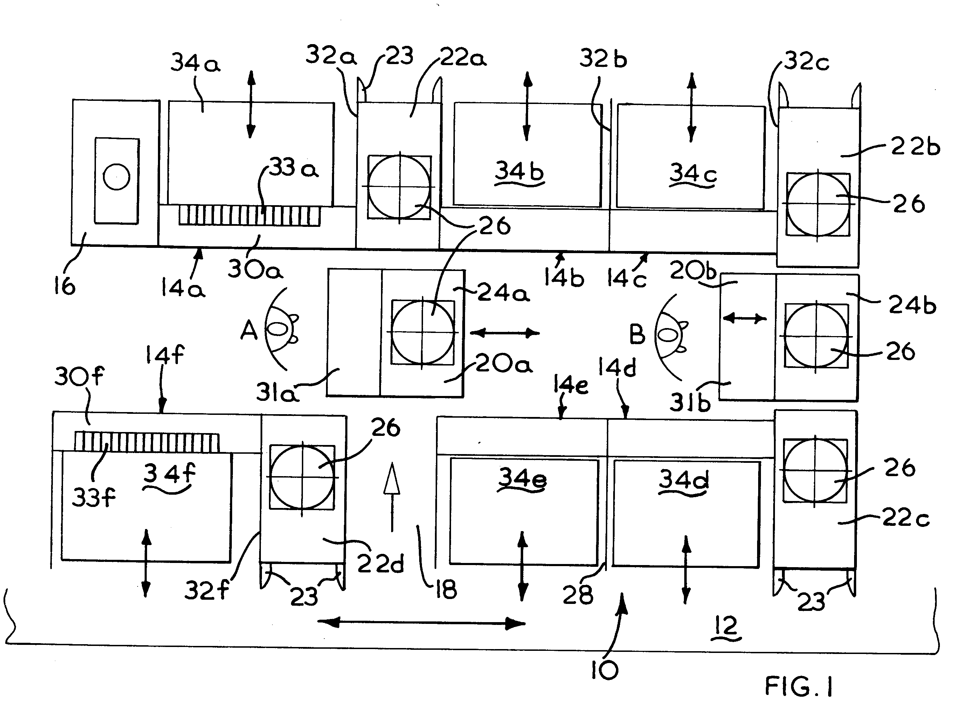

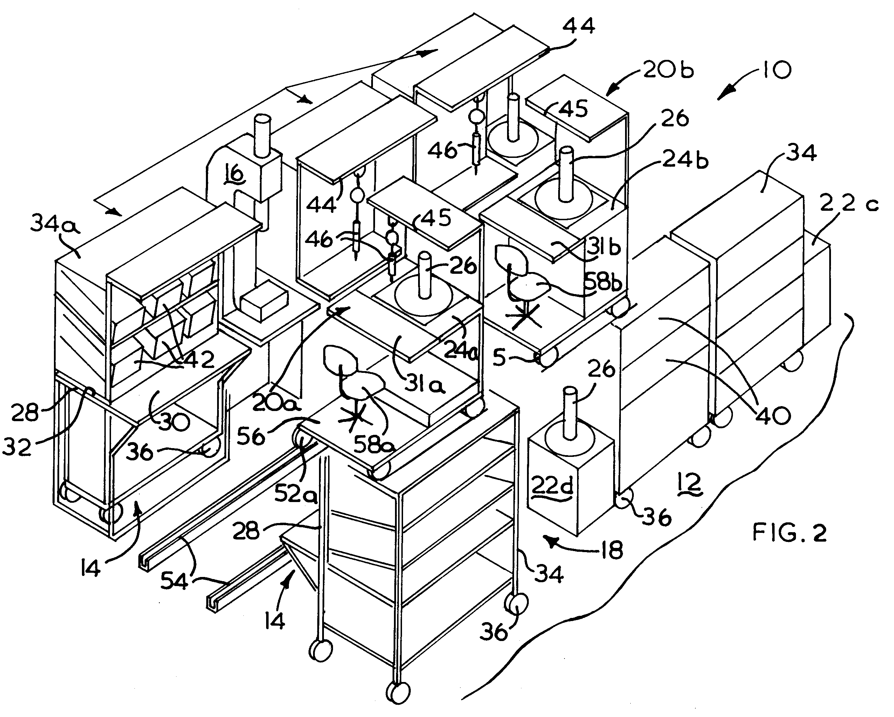

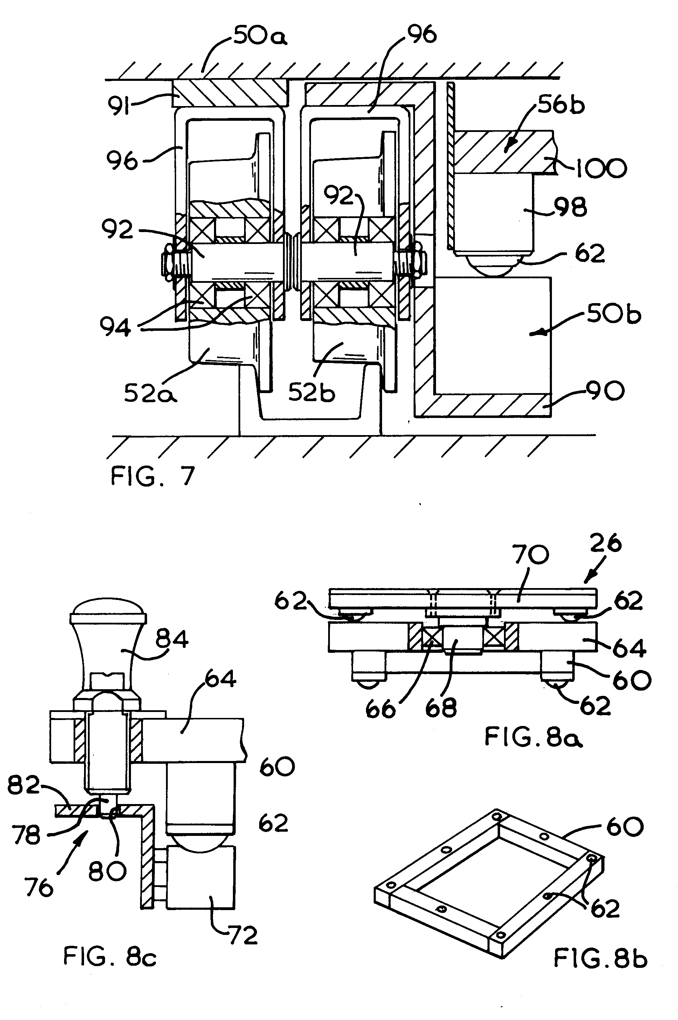

Figures 1 and 2 show an assembly cell 10 on a factory floor 12. The cell is adapted for the assembly of power tools, although other products might easily be assembled without major modification. The cell comprises a plurality of workstations 14a-f, here arranged in two lines. A press 16 is at the start of the cell and a passage 18 allows entrance and exit from the cell. The cell is designed for one, two or even three person operation and is provided with two mobile workstations 20a,b. Around the cell and on each mobile workstation are platforms 22a-d and 24a,b respectively, each adapted to receive a tool stand 26 (see Figures 8 a,b and c).

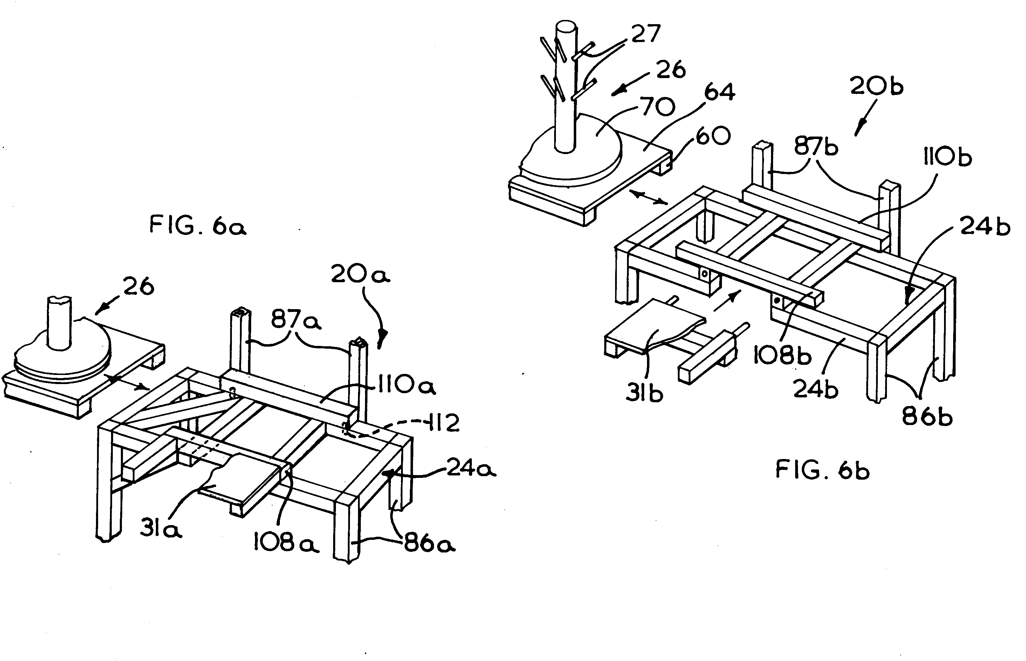

A tool stand 26 depends on the tool it is adapted to carry, and the stage of its construction, but generally each will carry eight individual units. In Figure 6b, the stand 26 is in the form of a tree having eight branches 27 on which part assembled tools can be hung.

Referring to Figures 8a,b and c, each stand 26 comprises a frame 60 having roller balls 62 mounted at each corner and in the middle of each side. On the frame 60 is a platform 64 in the centre of which is a bearing 66 locating a pin 68 of a table 70 of the stand 26. The table 70 has further roller balls 62 which support the table on the platform 64. The roller balls 62 permit travel in all directions and consquently the table 70 can rotate on the platform 64 about the axis provided by pin 68.

The frame 60 is supported on rails 72,74 disposed around the cell 10 and particularly on the platforms 22a to d and mobile workstations 20a,b. Indeed, such rails can constitute those platforms. The rails 72,74 (see Fig 8c) are profiled sections having a slot in each surface on which the rollers 62 on opposite sides of the frame 60can run. The frame 60 is provided with adjustable stops 76 which engage eyes placed in various locations where it may be decided to hold a stand 26 in position. The stops 76 comprise a spring loaded pin 78 adapted to snap into an eye 80 in a frame member 82. A knob 84 allows the pin 78 to be lifted out of the eye 78 to release the stand 26and permit movement.

As explained further below, stands 26 are adapted to be moved from platform to platform as a product is assembled. Moreover, they may be moved on to or off platforms at the beginning and end of the assembly process so that some platforms have guide elements 23 which guide mobile platforms (not shown) into engagement for transfer of a stand from one to the other. The mobile platforms return empty stands and take full ones to a test area and/or a packaging area or for other processing.

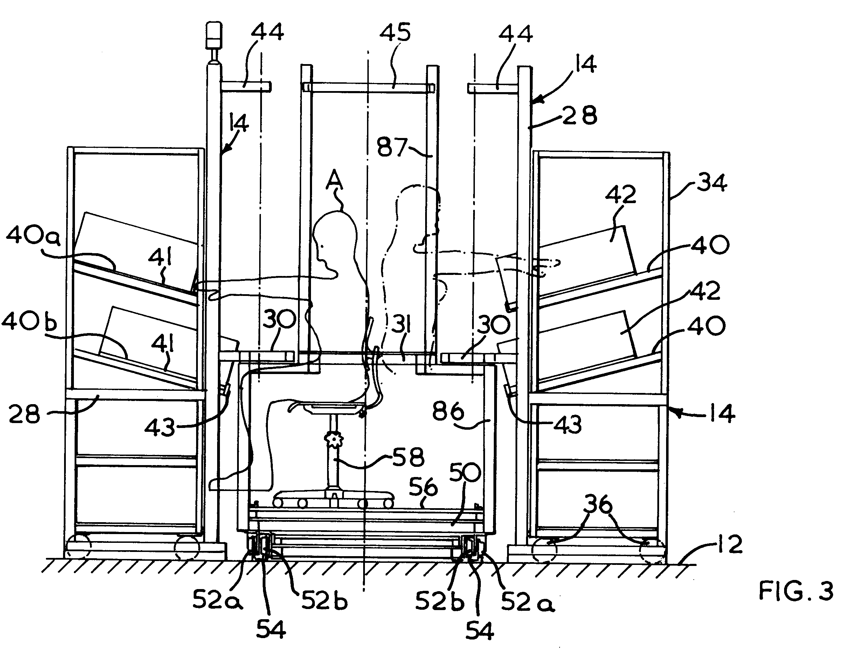

Each workstation 14 comprises a frame 28 providing a worktable 30 and a receptor 32. Into the receptor 32 is adapted to be inserted and releaseably locked a carriage 34. The carriage 34 is mounted on wheels 36 for easy manoeuvring. It has inclined shelves 40 to receive parts boxes 42. The shelves 40 have bases 41 with lips 43 to catch the boxes 42. The bases have two positions: a transport position shown at 40a in Figure 3 and a working position 40b. In the transport position, there is no overhang so there is little weight outside the wheel base. In the working position, parts in the boxes are easily reachable by operator A.

The workstations 14 each have an overhead rail 44 from which power tools 46 can be depended. Such tools are sometimes needed for assembly operations to be carried out at that station.

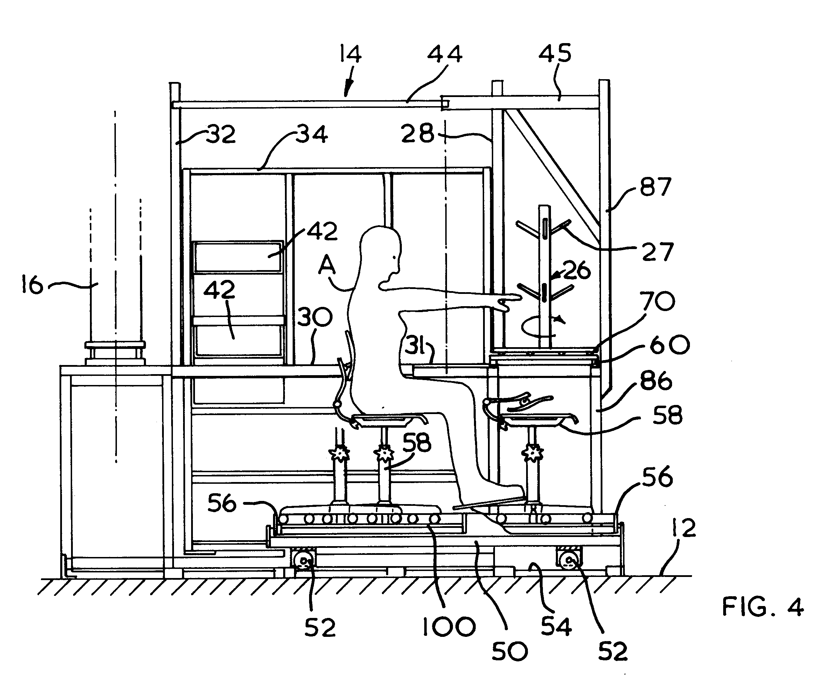

Turning to Figures 3 and 4, each mobile workstation 20 comprises a platform 50 mounted on wheels 52 on a track 54. The track is a U-shaped section bolted to floor 12 and in Figure 3 wheels 52b of workstation 20b can be seen running on the inside rails of the track 54. This is one aspect of the construction of the mobile workstations 20a,b which enables them to be nested together if desired, as explained further below.

The platform 50 carries a tray 56 which is slidable between two extremes on the platform. In the position shown complete in Figure 4 the tray 56 carries a chair 58on which the operator A sits. The tray allows mobility of the chair so that the operator can position him- or herself in a comfortable position with respect to worktable 31 of the workstation 20. The station has an overhead rail 45 for the attachment of depending tools 46. Moreover, the chair can be moved to either side of the tray 56 for comfortable positioning with respect to work tables 30 of adjacent fixed workstations 14.

Alternatively, if the operator so prefers, the chair can be folded down (as shown in the right of Figure 4) and the tray moved to the position shown incompletely in Figure 4. Then, the operator can stand on the floor 12 between the tracks 54. Standing, the operator can simply push and pull the mobile workstation along its track 54; sitting, he or she pulls the station along the tracks by gripping adjacent fixed stations.

The method of operation is that operator A begins at, for example, workstation 14f and commences assembly of, perhaps a sub-assembly there. Each partly completed product unit is placed on an empty stand 26 which at this time is positioned on platform 22d. The empty stand 26 is rolled on to platform 22d from a mobile platform (not shown) positioned with respect thereto by guide elements 23 from the area 12 around the assembly cell 10. The empty stands will have been supplied from the packaging area (not shown) where assembled product will have been taken off the stand for packaging. The operator then moves to station 14a where further sub-assembly operations may be conducted. This may involve the use of press 16 to fit bearings to motor armatures, for example. A roller tray 33a is mounted on the front of the workstation to transport product from one end of the station to the other. Indeed, such an arrangement throughout the cell could supplant the product stands 26. After a second operation is performed on units taken from the tray 33, they are placed on stand 26 on platform 22a. The stand 26 on platform 22d is then rolled on to mobile workstation 24a where further operation may be effected combining the sub-assemblies from platform 22a with those on mobile workstation 24a.

The mobile workstation may then be moved to further workstations where further operations are performed, perhaps involving a switch of stands 26 as the product units being assembled develop. When the assembly operation is being effected by a single person, the mobile workstation may be moved right to the end of the cell 10 where it is nested with workstation 20b. Indeed, in this case, the stations are locked together and become essentially a single workstation as described further below. If however, greater production capacity is required and two operators A,B are employed then operator A simply passes a completed stand 26 on platform 22a for operator B to pick up and continue work on that stand at workstations 14b-c while operator A begins again at stations 14a and f. In this event it is platform 22a which is recharged with empty stands from time to time.

The boxes 42 contain the parts used for assembly of the product units. These are filled in a remote store room from store shelves and placed there on the carriages 14. The carriages 14 are thus planned to have specific parts in specific numbers according to the number of units to be constructed. Thus each carriage 14 in the cell 10 has a specific location there according to the parts it carries and vice-versa. The whole assembly procedure can then be planned in advance and the storeperson need only know the number and types of parts to be put in each carriage and the collect location in the cell of each carriage. Moreover, the operator should not need to worry about having sufficient parts as that is precalculated. The operator requires only the appropriate skill in assembling each product and as he or she becomes accredited with the skill in assembling different products so his or her value is enhanced due to his or her adaptability to the construction of different products. Thus the response time of the factory to new demands of product is speeded up and hence stockpiles can be reduced.

Apart from the flexibility of the cell itself in being capable of adaptation to suit assembly of different executions of the same product almost instantaneously (perhaps involving just a switch of one or two carriages) or even of different products in an hour or so (as different tools are installed for example) one of the major benefits of this arrangement is its flexibility between one, two, three or even more person operations. This is achieved by the provision and construction of the two mobile workstations 24a,b. In one person operation, they are locked together and become one station as described further below. In two person operation, each is used separately as described above. In three person operation a third person helps operator A or B (depending who has the more time consuming operations) and in that case the relevant workstation becomes essentially fixed.

Two mobile workstations allow two operators to work on three sides, with worktables and parts available in easy reach on each side. This reduces the amount of movement required by each operator which is important for their comfort and thus their productivity. Having the workstations nesting together when required means that a storage space does not have to be found for the spare workstation outside the cell area.

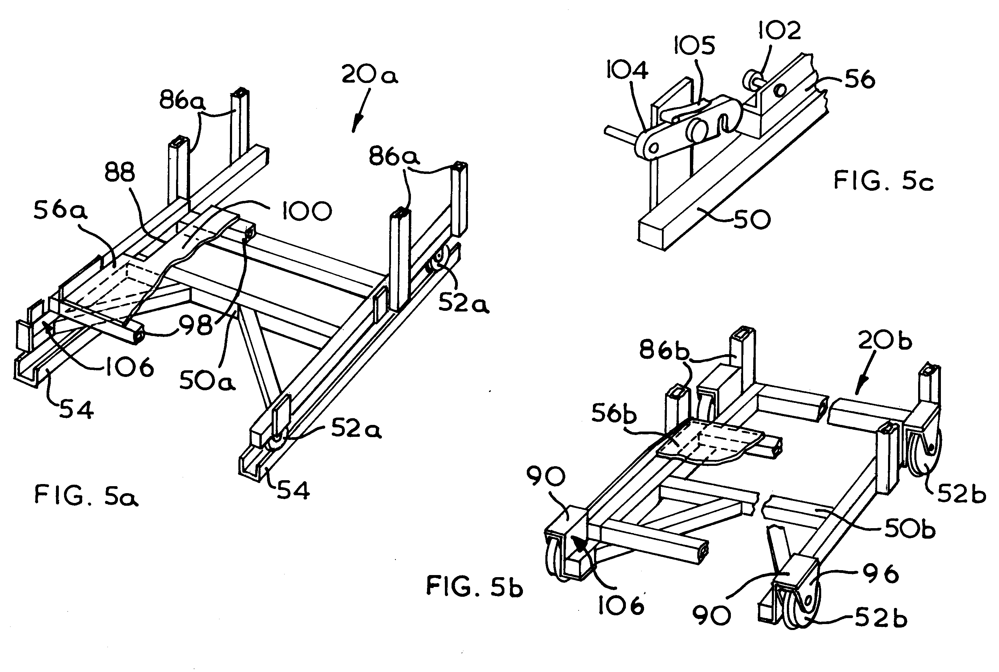

Turning now to Figures 5 to 11, the two mobile workstations 20a,b each have a base platform 50a,b as mentioned above. Each supports the tray 56a,b and each has upstanding legwork 86a,b. The tray 56a has a pair of slots 88 adapted to fit around the legwork 86b of the workstation 20b. This is for when the stations are nested together and the trays are moved to their rearward positions to enable the operator to stand at the nested stations 20.

Both platforms 50a,b are mounted on wheels 52a,b respectively but it should be noted that platfoim 50b is suspended below and inside the wheels 52b on S-brackets 90, while platform 50a is mounted above the wheels. The arrangement is shown in more detail in Figure 7. Each wheel 52 is journalled on an axle 92 through bearings 94, the axle being received in a bracket 96. In the case of wheels 52b, the bracket 96 is connected to S-bracket 90, while those of wheels 52a are connected simply to bases 91 of the base-platforms 50a.

The trays 56 are likewise modular constructed with a frame 98 and tray surface 100. The frame 98 has a number of roller balls 62 enabling it to roll along the platfonn 50. Refening back to Figure 5c, each tray 56 has a catch 102 while the platform 50 has locks 104 biassed by springs 105 so that the tray 56 can be locked in position. In Figures 5a and b, these locks are positioned at 106.

Turning now to Figures 6a and b, the legwork 86a,b of each station 20a,b supports the platform 24a,b respectively. Each platform supports armwork 87a,b. Also, each platform has two transverse rails 108,110,a,b each of the same height, length and separation. The ends of the rails 108,110,a,b are adapted to correspond with similar rails on each of the platforms 22 so that product stands can be rolled on and off the platforms 22 and 24. It should be appreciated that the ends of the platforms 24 pass under the worktables 30 of the fixed stations 14 and also under part of the platforms 22. Hence the rails 108,110 are much shorter than the width of the platforms 24.

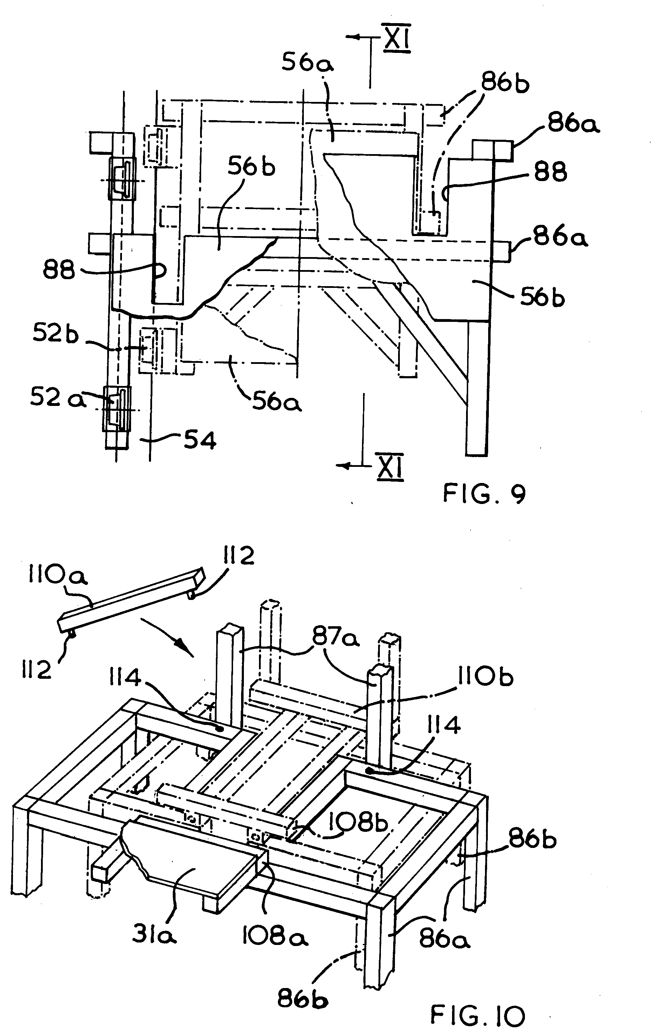

Indeed, the rail 108b is shorter than the separation of the armwork 87a which it must be to allow passage of the rail when the workstations are nested (see also Figure 10). Moreover, the rail 110a is removable having pegs 112 to allow repositioning in holes 114 in platform 24a after nesting of the workstations. It is apparent that there will be a slight jump between rails 108b,110b) and an adjacent platform but this is not a serious problem when transferring stands 26 as described above between platforms.

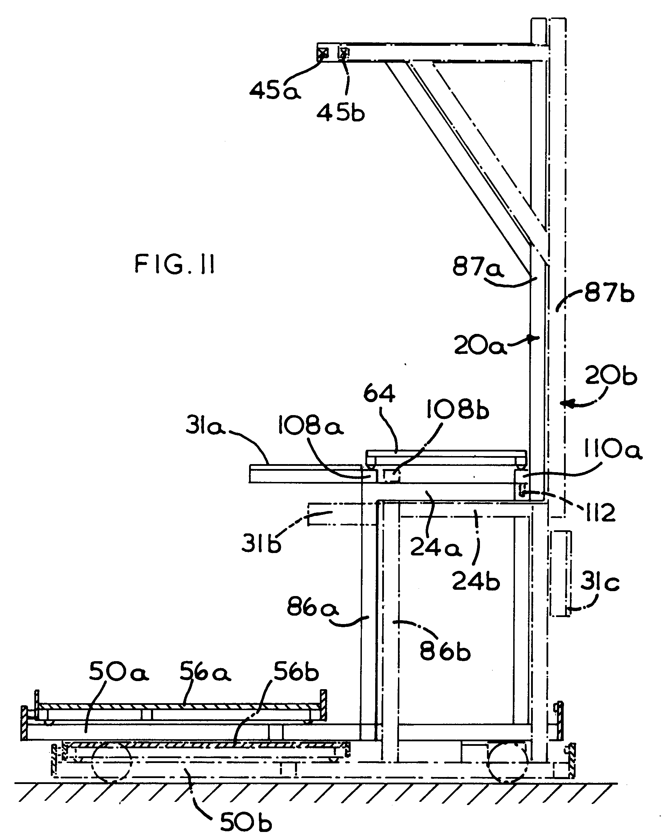

The front of each workstation 20a,b carries the worktable 3 la,b respectively. The latter is removable and storable at 31c (see Figure 11) when the stations are nested.

Figure 9 shows the two base platforms 50a,b of the workstations 20a,b when they are nested together. To the left of the drawing, the trays 56 are in the forward, chair position while on the right they are in the rear, standing position described in more detail above. The necessity for the slots 88 in tray 56a can more readily be understood from this drawing as in the rear position they receive the legwork 86b of the platform 20b.

Figure 10 is likewise of the platforms 20a,b nested, but in perspective view, and Figure 11 is in side view (sectional).

## Claims

1. An assembly arrangement for the assembly of product, said arrangement comprising an assembly cell (10) having a plurality of fixed workstations (14) defining a substantially enclosed work area, each workstation having a front, at which a worktable (30) is positioned, characterised in that a receptor (32) is adapted to receive a carriage (34) for assembly parts, said receptor being positioned at the side or rear of the workstation, space being provided to enable said carriage to be engaged with said receptor without entering said work area, and the workstation being arranged so that an operator (A,B) in said work area in front of one of said worktables is able to take said parts from said carriage to conduct a stage of assembly of said product, and a product transport system (26,22,20), adapted to receive said product in the course of its assembly and to transport said product from workstation to workstation in said work area for conducting different assembly operations on said products.

2. An arrangement as claimed in claim 1, characterised in that said transport system comprises a product stand (26) adapted to receive a plurality of said product.

3. An arrangement as claimed in claim 2, characterised in that it further comprises a mobile workstation (20) on which said stand can be transported between said fixed workstations.

4. An arrangement as claimed in claim 1,2 or 3, characterised in that each workstation has specific tools (46) provided for performing assembly operations on the product at that station.

5. An arrangement as claimed in any preceding claim, characteries in that said stand (26) is arranged to carry eight part-assembled products so that an operator performs assembly functions at a workstation on these eight products using parts from that workstation's carriage, before moving the stand to another workstation.

6. An arrangement as claimed in any preceding claim characterised in that the or each carriage comprises a frame mounted on wheels and having shelves (40) to carry parts boxes (42).

7. An arrangement as claimed in claim 6, characterised in that said shelves are inclined towards a front of the carriage and can be arranged to overhang the sides of the carriage so that they overhang said worktable when inserted in said receptor.

8. An arrangement as claimed in any preceding claim, characterised in that it is adapted for the assembly of power tools comprising a housing, an electric motor, a switch, a power cord and a tool head.

9. An arrangement as claimed in claim 3 or in any of claims 4 to 8 when dependent on claim 3, characterised in that said mobile workstation (20) is mounted on wheels running on a track (54) disposed in said work area adjacent each of said workstations.

10. An arrangement as claimed in claim 9, characterised in that said mobile workstation further comprises a worktable (31) and a tray (56) to receive a chair (58) on which an operator is able to sit for working at said worktable.

11. An arrangement as claimed in claim 10, characterised in that said tray is slidable under said worktable whereupon said operator can stand in front of said worktable.

12. An arrangement as claimed in claim 9, 10, or 11, characterised in that it comprises two of said mobile workstations which are adapted to nest with each other to form a single mobile workstation.

13. An arrangement as claimed in claim 12, characterised in that said track comprises two parallel rails each rail comprising an upturned U-shaped section, the wheels of one mobile workstation running on one leg of each rail and the wheels of the other mobile workstation running on the other leg of each rail.
